(19) Europäisches Patentamt

European Patent Office

Office européen des brevets

(11) Veröffentlichungsnummer: **0 155 379 B1**

# (12) EUROPÄISCHE PATENTSCHRIFT

(45) Veröffentlichungstag der Patentschrift: **10.03.93**

(51) Int. Cl.5: **G02B 6/26**

(21) Anmeldenummer: **84115154.1**

(22) Anmeldetag: **11.12.84**

(54) **Koppelanordnung zum Ankoppeln eines Lichtwellenleiters an einen Halbleiterlaser und Verfahren zur Herstellung einer solchen Anordnung.**

(30) Priorität: **02.03.84 DE 3407840**

(43) Veröffentlichungstag der Anmeldung:
**25.09.85 Patentblatt 85/39**

(45) Bekanntmachung des Hinweises auf die
Patenterteilung:
**10.03.93 Patentblatt 93/10**

(84) Benannte Vertragsstaaten:
**AT BE CH DE FR GB IT LI NL SE**

(56) Entgegenhaltungen:
**DE-A- 2 360 951**
**DE-A- 2 805 358**
**DE-A- 3 101 378**
**DE-A- 3 134 508**

**IEEE JOURNAL OF OUANTUM ELECTRONICS,
Band OE-17, Nr. 6, Juni 1981, Seiten
1021-1027; M. SARUWATARI et al.: "Efficient
laser diode to single-mode fiber coupling
using a combination of two lenses in confocal condition"**

**ELECTRONICS LETTERS, 19, 205 (1983)**

**APPLIED OPTICS, 19, 2578 (1980)**

(73) Patentinhaber: **SIEMENS AKTIENGESELL-
SCHAFT**
**Wittelsbacherplatz 2**
**W-8000 München 2(DE)**

(72) Erfinder: **Keil, Rudolf, Dr.-Ing.**
**Pulverturmstrasse 27a**
**W-8000 München 45(DE)**
Erfinder: **Mathyssek, Konrad, Dr.-Ing.**
**Herzog-Tassilo-Ring 28**
**W-8011 Zorneding(DE)**
Erfinder: **Wittmann, Julius, Dipl.-Ing.**
**Ludwig-Thoma-Strasse 1**
**W-8024 Deisenhofen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft eine Koppelvorrichtung zum Einkoppeln von Licht eines Halbleiterlasers in eine Monomodelichtleitfaser nach dem Oberbegriff des Patentanspruchs 1.

Für die Ankopplung eines Lichtwellenleiters, insbesondere eines Monomode-Lichtwellenleiters an Halbleiterlaser ist eine Vielzahl von Koppelvorrichtungen vorgeschlagen und untersucht worden (siehe beispielsweise Sakai J.I. und Kimura T.: Design of miniature lens for semiconductor laser to single-mode fiber coupling, IEEE Journal of Qu. Electron. QE-16 (1980) 1059-1066; Saruwatari M. und Sugie T.: Efficient laser diode to single-ode fiber coupling using a combination of two lenses in confocal condition, IEEE Journal of Qu. Electron. QE-17 (1981) 1021-1027; Kuwahara H., Sasaki M. und Tokoyo N.: Efficient coupling from semiconductor laser into single-mode fibers with tapered hemispherical ends, Appl. Optics 19 (1980) 2578-2583; Sumida M. and Takemoto K.: Lens aberration effect on a laser-diode-to-single-mode fiber coupler, Electron. Lett. 18 (1982) 582-587; Khoe G.D. Poulissen J. de Vrieze H.M.: Efficient coupling of laser diodes to tapered monomode fibres with high-index end, Electron. Lett. 19 (1983) 205-207 und Liou K.Y.: Single-longitudinal-mode operation of injection laser coupled to a grinrod external cavity, Electron. Lett. 19 (1983) 750-751).

Zwei wichtige Beurteilungskriterien für Koppelvorrichtungen sind ein möglichst hoher Koppelwirkungsgrad und eine möglichst geringe Rückwirkung durch reflektiertes Licht auf den Laser, die durch entsprechende Ausführung der Koppeloptik beeinflußt werden können.

Mit diskreten Linsen, beispielsweise einer Kombination aus Gradientenlinse und Kugellinse, wie sie aus dem genannten Artikel in IEEE Journal of Quantum Electronics QE 17 (1981) S. 1021 bis 1027 bekannt ist und dem Oberbegriff des Anspruchs 1 zugrundeliegt, erreicht man große Öffnungswinkel und relativ große Abstände zwischen Laser und der ersten Linsenfläche. Durch den großen Abstand zwischen dem Laser und der Linse wird die Rückwirkung durch reflektiertes Licht von der ersten Linsenfläche verringert. Dieser Vorteil kann jedoch durch die Vielzahl von rückwirkenden Linsenflächen verlorengehen. Zudem wächst die Zahl der Justierschritte mit der Anzahl der diskreten Linsen.

Weniger Justierschritte sind nötig, wenn die Koppelvorrichtung mit der Faser fest verbunden ist, wie beispielsweise beim Fasertaper mit angeschmolzener Linse. Nachteilig ist hierbei der geringe Öffnungswinkel und der relativ kleine Abstand zwischen Laser und Linse und die damit größere Rückwirkung durch die erste Linsenfläche als bei mehreren diskreten Linsen. Dafür ist jedoch nur diese erste Linsenfläche der angeschmolzenen Linse vorhanden.

Aufgabe der vorliegenden Erfindung ist es, eine Koppelvorrichtung der eingangs genannten Art anzugeben, die einen großen Öffnungswinkel, eine geringe Rückwirkung der ersten Linsenfläche und nur wenige reflektierende Flächen aufweist, und die wenig Justierschritte benötigt.

Diese Aufgabe wird durch eine Koppelvorrichtung der eingangs genannten Art gelöst, welche die im kennzeichnenden Teil des Patentanspruchs 1 angegebenen Merkmale aufweist.

Die erfindungsgemäße Koppelvorrichtung verbindet die Vorteile einer diskreten Linsenanordnung, die im großen Öffnungswinkel und in der geringen Rückwirkung der ersten Linsenfläche zu sehen sind, mit den Vorteilen einer integrierten Linsenanordnung, die wenig Justierschritte benötigt und wenige reflektierende Flächen aufweist.

Die erfindungsgemäße Koppelvorrichtung ist mit dem Lichtwellenleiter verbunden. Mit ihr wird eine Anpassung des Fleckradius des Lasers an den größeren Fleckradius des Lichtwellenleiters erreicht, der durch den Radius des im Lichtwellenleiter geführten Grundmodes bestimmt ist.

Bevorzugte und vorteilhafte Ausgestaltungen der erfindungsgemäßen Koppelvorrichtung gehen aus den Ansprüchen 2 bis 6 hervor.

Insbesondere hat es sich gezeigt, daß die Herstellung des richtigen Krümmungsradius der brechenden Linse sehr erleichtert wird, wenn gemäß Anspruch 5 das Ende der Gradientenfaser einen Durchmesser aufweist, der zumindest annähernd dem Zweifachen dieses Krümmungsradius entspricht.

Ein erfindungsgemäßes Verfahren zum Einkoppeln von Licht eines Halbleiterlasers in eine Monomodelichtleitfaser geht aus dem Anspruch 7 hervor. Die Ansprüche 8 und 9 geben zwei verschiedene Wege an, wie bei diesem Verfahren nach Anspruch 7 die Linse hergestellt werden kann.

Für den Fall, daß der Durchmesser der angespleißten Gradientenlinse größer ist als der besagte Krümmungsradius, wird die Gradientenlinse zweckmäßigerweise gemäß Anspruch 10 auf den genannten Durchmesser abgeätzt.

Die Erfindung wird anhand der beigefügten Figuren in der folgenden Beschreibung näher erläutert, wobei insbesondere eine beispielhafte Koppelanordnung beschrieben wird. Von den Figuren zeigen

Figur 1 den Strahlverlauf in einer Gradientenlinse generell und speziell in einer Gradientenfaser, die an eine Monomode-Lichtleitfaser angekoppelt ist,

Figur 2 die beispielhafte erfindungsgemäße Koppelvorrichtung und

Figur 3 eine Koppelvorrichtung mit geätzter Gradientenfaser.

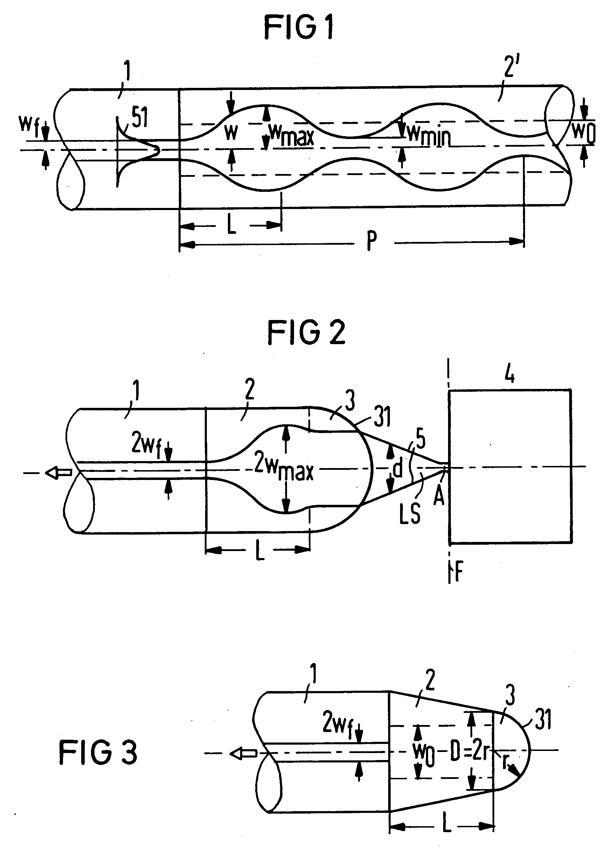

In einer Gradientenlinse, beispielsweise eine Gradientenfaser oder ein anderer dielektrischer Wellenleiter mit parabolischem oder annähernd parabolischem radialem Brechzahlverlauf, ändert sich der Fleckradius w des geführten Lichts mit gaußförmiger Querschnittsverteilung 51 der Lichtintensität in Längsrichtung der Linse periodisch. Wie die Figur 1 zeigt, schwankt der Fleckradius w längs der Gradientenlinse 2' wellenförmig periodisch zwischen einem maximalen Fleckradius $w_{max}$ und einem minimalen Fleckradius $w_{min}$. Der zu einer genauen Anpassung notwendige maximale Fleckradius $w_{max}$ bei Ankopplung an eine Monomodefaser 1 mit dem Fleckradius $w_f = w_{min}$ errechnet sich aus Nicia A.: Loss analysis of laser-fiber coupling and fiber combiner, and its application to wavelength division multiplexing, Appl. Optics. 21 (1982) 4280-4289 zu

$$w_{max} = w_O^2/w_f$$

wobei $w_O$ der Fleckradius des ausbreitungsfähigen Grundmodes in der Gradientenfaser 20 ist (siehe dazu D. Marcuse: Gaussian approximation of the fundamental modes of graded-index fibers, J. Opt. Soc. Am. 68 (1978) 103-109).

Um eine möglichst große Brennweite der Koppelvorrichtung und damit einen großen Abstand zwischen dem Halbleiterlaser und der Linse zu erreichen, muß der maximale Fleckradius $w_{max}$ möglichst groß sein. Da $w_{max}$ quadratisch mit $w_O$ wächst, ist eine Gradientenfaser mit möglichst großem Fleckradius $w_O$ des Grundmodes günstig. Typische Werte liegen zwischen 7 $\mu m \leq w_O \leq$ 10 $\mu m$ bei einer Wellenlänge $\lambda_O = 1,3$ $\mu m$. Mit Fleckradien von 5 $\mu m \leq w_f \leq$ 6 $\mu m$ in der Monomodefaser 20 ergibt sich eine Fleckaufweitung um den Faktor 1,5 bis 4. Die in der Figur 1 eingetragene Pitchlänge P der Gradientenlinse liegt bei einer Gradientenfaser bei etwa 1 mm. Die Berechnung der Pitchlänge einer Gradientenfaser wird beispielsweise in Tomlinson W.J.: Aberrations of GRIN-rod lenses in multimode optical fiber devices, Appl. Opt. 19 (1980) 1117-1125 durchgeführt.

Die vorstehend dargelegten Erkenntnisse sind bei der in der Figur 2 dargestellten Koppelvorrichtung berücksichtigt. Bei dieser Koppelvorrichtung ist mit 1 die gleiche Monomodefaser wie in Figur 1 bezeichnet und die an diese Monomodefaser 1 unmittelbar angespleißte Gradientenfaser 2 entspricht bis auf die definierte Länge L genau der Gradientenfaser 2' in Figur 1. Die definierte Länge L der Gradientenfaser 2 liegt im Bereich P/4 ≤ L<P/2 und hängt im wesentlichen vom gewünschten Öffnungswinkel und der gewünschten Brennweite der Koppelvorrichtung ab. Da die Strahlaufweitung in der Gradientenfaser gemäß Figur 1 periodisch erfolgt, sind auch definierte Längen L im Bereich P/4 + n • P/2 ≤ L < P/2 + n P/2 möglich, wobei n eine beliebige natürliche Zahl bedeutet. Allerdings wirken sich dabei Linsenfehler der Gradientenfaser, insbesondere die sphärische Aberration verstärkt aus.

An die Gradientenfaser 2 definierter Länge L ist die brechende Linse 3 angeschmolzen, deren brechende Linsenfläche 31 im dargestellten Fall sphärisch ist. Anstelle der sphärischen Linsenfläche kann auch eine asphärische Linsenfläche verwendet werden.

Der Halbleiterlaser 4 wird relativ zur Koppelvorrichtung so angeordnet, daß seine Apertur A, aus welcher der Laserstrahl LS austritt, in der Brennebene F der brechenden Linse 3 liegt. Wie sich der Fleckdurchmesser d des aus dem Halbleiterlaser 4 austretenden Laserstrahls LS in Ausbreitungsrichtung und beim Durchgang durch die Koppelvorrichtung 2 bis zur Monomodefaser 1 ändert, zeigen die Fleckbegrenzungslinien 5. Der Fleckdurchmesser d des divergent aus der Apertur A austretenden Laserstrahls LS vergrößert sich auf der Strecke vom Halbleiterlaser 4 bis zur Linsenfläche 31 der brechenden Linse 3 auf einen Durchmesser, der etwa $2w_{max}$ entspricht. Dieser Durchmesser wird in der brechenden Linse in etwa beibehalten und verkleinert sich nach dem Übertritt des Laserstrahls in die Gradientenfaser 2 auf den Durchmesser $2w_{min} = 2w_f$, der dem Fleckdurchmesser des Grundmodus der Monomodefaser 1 entspricht und der an der Grenzfläche zwischen der Gradientenfaser 2 und der Monomodefaser 1 erreicht wird. Dieser Durchmesser wird in der Monomodefaser 1 beibehalten.

Zur Herstellung der Koppelvorrichtung nach Figur 2 kann so vorgegangen werden: Eine Gradientenfaser wird mit einem kommerziellen Spleißgerät an die Monomodefaser 1 angespleißt und mit einem Fasertrenngerät auf die gewünschte definierte Länge L abgeschnitten. Zweckmäßigerweise wird eine Gradientenfaser verwendet, die den gleichen Außendurchmesser wie die Monomodefaser aufweist, weil dadurch sowohl das Spleißen als auch das Trennen problemlos erfolgt.

An das glatt abgetrennte freie Ende der angespleißten Gradientenfaser kann eine Quarzlinse oder eine Linse aus hochbrechendem Glas angeschmolzen werden. Die Quarzlinse wird durch Rundschmelzen des Endes der Gradientenfaser im Lichtbogen hergestellt. Der gewünschte Krümmungsradius der brechenden Linsenfläche bildet sich ingbesondere beim Rundschmelzen des Faserendes am einfachsten, wenn das Ende der Gradientenfaser vorher auf einen Durchmesser abgeätzt wird, der dem doppelten Krümmungsradius der Linsenfläche enspricht. Die hochbrechende Linse kann durch Eintauchen der Gradientenfaser in eine Schmelze aus hochbrechendem Glas erzeugt werden. Beim Herausziehen bleibt ein Tropfen kontrollierbarer Größe hängen, der sich durch die Oberflächenspannung zu einer Linse formt. Damit könnten sphärische und asphärische Linsen hergestellt werden (siehe R. Keil, K. Mathyssek, J. Wittmann: Herstellung von gezogenen Glasfasertapern mit angeschmolzener Linse, Laborbericht LB-Nr. FKE 3-444).

Die Figur 3 zeigt eine Koppelvorrichtung aus der Monomodefaser 1, einer daran angespleißten Gradientenfaser 2 und einer angeschmolzenen brechenden Linse 3, bei der die Gradientenfaser 2 durch Eintauchen in ein Ätzmittel an dem Ende, an dem die brechende Linse 3 angeschmolzen ist, einen Durchmesser D aufweist, der zumindest annähernd gleich dem Zweifachen des gewünschten Krümmungsradius r der sphärischen Linsenfläche 31 der brechenden Linse 3 ist. Das Abätzen erfolgt zweckmäßigerweise nach dem Anspleißen der Gradientenfaser 2 an die Monomodefaser 1 und natürlich vor dem Anbringen der brechenden Linse 3.

**Patentansprüche**

1. Koppelvorrichtung zum Einkoppeln von Licht eines Halbleiterlasers (4) in eine Monomodelichtleitfaser (1) mit einem vorgegebenen Fleckradius ($w_f$), bestehend aus einer Gradientenlinse (2) und einer optischen Linse (3) mit nur einer konvexen brechenden Fläche (31), **dadurch gekennzeichnet,**
daß die Gradientenlinse (2) aus einer Gradientenfaser definierter Länge (L) besteht, deren Minimalfleckradius ($w_{min}$) im wesentlichen gleich dem Fleckradius ($w_f$) der Lichtleitfaser (1) ist,
daß die Länge (L) bestimmt ist durch die Bedingung $P/4 + n.P/2 < L < P/2 + n.P/2$ mit n = 0, 1, 2, 3, ... ,
wobei P die Pitchlänge der Gradientenfaser (2) bedeutet, daß eine Endfläche der Gradientenfaser (2) zum Anspleißen an die Lichtleitfaser (1) vorbereitet ist,
daß auf der anderen Endfläche der Lichtleitfaser (1) die Linse (3) derart angeschmolzen ist, daß die konvexe brechende Flache (31) von der anderen Endfläche der Gradientenfaser (2) abgekehrt ist,
und daß die Gradientenfaser (2) und die Linse (3) so dimensioniert sind, daß ein Punkt in der Mitte der einen Endfläche der Gradientenfaser (2) auf einen Punkt vor der konvexen brechenden Fläche außerhalb der Linse (3) abgebildet wird.

2. Vorrichtung nach Anspruch 1, **dadurch gekennzeichnet,** daß der maximale Fleckradius ($w_{max}$) mehr als das 1,4-fache des minimalen Fleckradius ($w_{min}$) beträgt.

3. Vorrichtung nach Anspruch 2, **dadurch gekennzeichnet,** daß der maximale Fleckradius mehr als das 1,5-fache des minimalen Fleckradius ($w_{min}$) beträgt.

4. Vorrichtung nach einem der vorhergehenden Ansprüche, **dadurch gekennzeichnet,** daß daß die konvexe Fläche (31) der Linse (3) eine sphärische Linsenfläche aufweist.

5. Vorrichtung nach Anspruch 4, **dadurch gekennzeichnet,** daß die Gradientenfaser (2) an der zweiten Endfläche, an welcher die Linse (3) angeschmolzen ist, einen Durchmesser (D) aufweist, der zumindest annähernd das zweifache des vorbestimmten Krümmungsradius (r) der konvexen Fläche (31) der Linse (3) beträgt.

6. Vorrichtung nach einem der Ansprüche 1 bis 3, **dadurch gekennzeichnet,** daß die konvexe Fläche (31) der Linse (3) aspärisch ist.

7. Verfahren zum Einkoppetn von Licht eines Halbleiterlasers in eine Monomodelichtleitfaser, bei dem eine Gradientenfaser, deren minimaler Fleckradius ($w_{min}$) im wesentlichen gleich dem Fleckradius ($w_f$) der Monomodelichtleitfaser (1) ist, mit ihrer ersten Endfläche an die Monomodelichtleitfaser angespleißt wird,
die Gradientenfaser (2) auf eine bestimmte Länge abgeschnitten wird,
an die durch das Anschneiden entstandene zweite Endfläche der Gradientenfaser eine Linse mit einer von dieser zweiten Endfläche abgekehrten konvexen brechenden Fläche (31) angeschmolzen wird,
wobei die bestimmte Länge der Gradientenfaser so gewählt wird, daß sich nach dem Anschmelzen der Linse eine Länge (L) der Gradientenfaser ergibt, die die Bedingung $P/4 + n.P/2 < L < P/2 + n.P/2$ mit n = 0, 1, 2,. 3, ...,
erfüllt, wobei P die Pitchlänge der Gradientenfaser (2) bedeutet,
und wobei die Dimensionierung der Gradientenfaser (2) und der Linse (3) so gewählt werden, daß ein Punkt in der Mitte der einen Endfläche der Gradientenfaser (2) auf einen Punkt vor der konvexen brechenden Fläche außerhalb der Linse (3) abgebildet wird,

und die Apertur des Halbleiterlasers in diesem Punkt vor der konvexen Fläche der Linse (3) angeordnet wird.

8. Verfahren nach Anspruch 7,
**dadurch gekennzeichnet,** daß die Linse (3) durch Rundschmelzen der zweiten Endfläche der an die Monomodelichtleitfaser (1) angespleißten Gradientenfaser (2) im Lichtbogen erzeugt wird.

9. Verfahren nach Anspruch 7,
**dadurch gekennzeichnet,** daß die Linse (3) durch Eintauchen der glatt abgeschnittenen zweiten Endfläche der an die Monomodelichtleitfaser angespleißten Gradientenfaser (2) in eine Schmelze aus Glas durch Herausziehen der eingetauchten zweiten Endfläche aus der Schmelze erzeugt wird.

10. Verfahren nach einem der Ansprüche 7 bis 9, insbesondere nach Anspruch 8,
**dadurch gekennzeichnet,** daß die an die Monomodelichtleitfaser (1) angespleißte Gradientenlinse (2) vor dem Anbringen der Linse (3) durch Eintauchen in ein Ätzmittel an der zweiten Endfläche auf einen zweiten Durchmesser (D) abgeätzt wird, der zumindest annähernd das zweifache eines vorbestimmten Krümmungsradius (r) der konvexen Fläche (31) der Linse (3) entspricht.

## Claims

1. Coupling device for coupling light from a semiconductor laser (4) into a monomode optical fibre (1) having a prescribed spot radius ($w_f$), comprising a gradient lens (2) and an optical lens (3) having only one convex refractive surface (31), characterised in that the gradient lens (2) comprises a gradient fibre of defined length (L), whose minimum spot radius ($w_{min}$) is essentially equal to the spot radius ($w_f$) of the optical fibre (1), in that the length (L) is determined by the condition
$P/4 + n.P/2 < L < P/2 + n.P/2$ where n = 0, 1, 2, 3, ... ,
P denoting the pitch length of the gradient fibre (2), in that an end face of the gradient fibre (2) is prepared for splicing to the optical fibre (1), in that the lens (3) is fused on the other end face of the optical fibre (1) in such a way that the convex refractive surface (31) is averted from the other end face of the gradient fibre (2), and in that the gradient fibre (2) and the lens (3) are dimensioned such that a point in the centre of the one end face of the gradient fibre (2) is projected onto a point in front of the convex refractive surface outside the lens (3).

2. Device according to Claim 1, characterised in that the maximum spot radius ($w_{max}$) is more than 1.4 times the minimum spot radius ($w_{min}$).

3. Device according to Claim 2, characterised in that the maximum spot radius is more than 1.5 times the minimum spot radius ($w_{min}$).

4. Device according to one of the preceding claims, characterised in that the convex surface (31) of the lens (3) has a spherical lens surface.

5. Device according to Claim 4, characterised in that at the second end face on which the lens (3) is fused the gradient fibre (2) has a diameter (D) which is at least approximately twice the predetermined radius of curvature (r) of the convex surface (31) of the lens (3).

6. Device according to one of Claims 1 to 3, characterised in that the convex surface (31) of the lens (3) is aspherical.

7. Method for coupling lights from a semiconductor laser into a monomode optical fibre, in which a gradient fibre whose minimum spot radius ($w_{min}$) is essentially equal to the spot radius ($w_f$) of the monomode optical fibre (1) is spliced with its first end face to the monomode optical fibre, the gradient fibre (2) is cut to a specific length, fused to the second end face, produced by the cutting, of the gradient fibre is a lens having a convex refractive surface (31) averted from this second end face, the specific length of the gradient fibre being selected such that after the fusing of the lens a length (L) of the gradient fibre is produced which satisfies the condition
$P/4 + n.P/2 < L < P/2 + n.P/2$ where n = 0, 1, 2, 3, ...,
P denoting the pitch length of the gradient fibre (2), and the dimensioning of the gradient fibre (2) and of the lens (3) being selected such that a point in the centre of one end face of the gradient fibre (2) is projected onto a point in front of the convex refractive surface outside the lens (3), and the aperture of the semiconductor laser being arranged at this point in front of the convex surface of the lens (3).

8. Method according to Claim 7, characterised in that the lens (3) is produced in the arc by fusing around the second end face of the gradient fibre (2) spliced to the monomode optical fibre (1).

9. Method according to Claim 7, characterised in that the lens (3) is produced by immersing the smoothly cut second end face of the gradient fibre (2), spliced to the monomode optical fibre into a melt made from glass, by withdrawing the immersed second end face from the melt.

10. Method according to one of Claims 7 to 9, preferably according to Claim 8, characterised in that prior to providing the lens (3) the gradient lens (2) spliced to the monomode optical fibre (1) is etched on the second end face by immersion in an etchant to a second diameter (D) which corresponds at least approximately to twice the predetermined radius of curvature (r) of the, convex surface (31) of the lens (3).

## Revendications

1. Dispositif de couplage pour injecter la lumière d'un laser à semiconducteurs (4) dans une fibre optique monomode possédant un rayon de spot prédéterminé ($w_f$), et constitué par une lentille à gradient (2) et une lentille optique (3) possédant une seule surface convexe réfringente (31),
caractérisé par le fait
que la lentille à gradient (2) est constituée par une fibre à gradient de longueur définie (L), dont le rayon de spot minimum ($w_{min}$) est sensiblement égal au rayon de spot ($w_f$) de la fibre optique (1),
que la longueur (L) est déterminée par la condition
$P/4 + n.P/2 < L < P/2 + n.P/2$ avec n = 0, 1, 2, 3, ...,
P désignant la longueur du pas de la fibre à gradient (2), qu'une surface terminale de la fibre à gradient (2) est préparée pour être raccordée par épissage à la fibre optique (1),
que la lentille (3) est fixée par fusion sur l'autre surface terminale de la fibre optique (1) de telle sorte que la surface réfringente complexe (31) est tournée à l'opposé de l'autre surface terminale dé la fibre à gradient (2), et
que la fibre à gradient (2) et la lentille (3) sont dimentionnées de manière que l'image d'un point situé au centre d'une surface terminale de la fibre à gradient (2) est formée en un point situé en avant de la surface réfringente convexe; à l'extérieur de la lentille (3) .

2. Dispositif suivant la revendication 1, caractérisé par le fait que le rayon de spot maximum ($w_{max}$) est supérieur à 1,4 fois le rayon de spot minimum ($w_{min}$).

3. Dispositif suivant la revendication 2, caractérisé par le fait que le rayon de spot maximum est supérieur à 1,5 fois le rayon de spot minimum ($w_{min}$).

4. Dispositif suivant l'une des revendications précédentes, caractérisé par le fait que la surface convexe (31) de la lentille (3) possède une surface de lentille sphérique.

5. Dispositif suivant la revendication 4, caractérisé par le fait que la fibre à gradient (2) possède, au niveau de la seconde face terminale, au niveau de laquelle la lentille (3) est fixée par fusion, un diamètre (D) qui est égal au moins approximativement au double du rayon de courbure prédéterminé (a) de la surface convexe (31) de la lentille (3).

6. Dispositif suivant l'une des revendications 1 à 3, caractérisé par le fait que la surface convexe (31) de la lentille (3) est asphérique.

7. Procédé pour injecter une lumière d'un laser à semiconducteurs dans une fibre optique monomode, selon lequel on raccorde par épissage une fibre à gradient, dont le rayon de spot minimum ($w_{min}$) est sensiblement égal au rayon de spot ($w_f$) de la fibre optique monomode (1), par sa première surface terminale à la fibre optique monomode,
la fibre à gradient (2) est découpée à une longueur déterminée,
sur la seconde surface terminale, qui est obtenue par découpage de la fibre à gradient, on fixe par fusion une lentille possédant une surface réfringente convexe (31) tournée à l'opposé de cette seconde surface terminale,
la longueur déterminée de la fibre à gradient étant choisie de manière qu'après la fixation par fusion de la lentille, on obtienne pour la fibre à gradient une longueur (L), qui satisfait à la condition
$P/4 + n.P/2 < L < P/2 + n.P/2$ avec n = 0, 1, 2, 3, ...,
P désignant la longueur du pas de la fibre à gradient (2),
le dimensionnement de la fibre à gradient (2) et de la lentille (3) étant choisi de manière que l'image d'un point au centre d'une surface terminale de la fibre à gradient (2) est formée en un point situé en avant de la surface réfringente convexe, à l'extérieur de la lentille (3),
et l'ouverture du laser à semiconducteurs est disposée en ce point en avant de la surface convexe de la lentille (3).

**8.** Procédé suivant la revendication 7, caractérisé par le fait qu'on forme la lentille (3) au moyen d'une fusion circulaire de la seconde face terminale de la fibre à gradient (2), réunie par épissage à la fibre optique monomode (1), dans un arc électrique.

**9.** Procédé suivant la revendication 7, caractérisé par le fait qu'on forme la lentille (3) en immergeant la seconde surface terminale découpée lisse de la fibre à gradient (2) réunie par épissage à la fibre optique monomode, dans une masse fondue de verre et en tirant la seconde surface terminale immergée hors de la masse fondue.

**10.** Procédé suivant l'une des revendications 7 à 9, notamment suivant la revendication 8, caractérisé par le fait que l'on corrode la lentille à gradient (2), réunie par épissage à la fibre optique monomode (1), au niveau de la seconde surface terminale, avant la mise en place de la lentille (3), et ce par immersion dans un agent corrosif, pour régler un second diamètre (D) qui correspond au moins approximativement au double d'un rayon de courbure prédéterminé (r) de la surface convexe (31) de la lentille (3).

# FIG 1

# FIG 2

# FIG 3